# EUROPÄISCHE PATENTSCHRIFT

(11) **EP 0 320 683 B1**
(45) Veröffentlichungstag und Bekanntmachung des Hinweises auf die Patenterteilung: **01.09.1993**
(21) Anmeldenummer: 88119754.5
(22) Anmeldetag: 26.11.1988
(51) Int. Cl.: G05D 1/02, G05D 1/03

(54) **Anlage zur Führung von Flurförderzeugen mit wenigstens einem lenkbaren Rad und einer richtungsbestimmenden Signalübertragung auf das Flurförderzeug**
Guidance installation for ground transport vehicles provided with at least one steerable wheel and a routing decision signal transmission on these transport vehicles
Installation de conduite de véhicules de transport pourvus au moins d'une roue orientable et d'une transmission de signal de détermination de direction sur le véhicule de transport

(30) Priorität: 18.12.1987 DE 3743016
(43) Veröffentlichungstag der Anmeldung: 21.06.1989
(73) Patentinhaber: Jungheinrich Aktiengesellschaft, 22047 Hamburg (DE)
(72) Erfinder: Christensen, Sven, Dipl.-Ing., D-2000 Hamburg 60 (DE); Haelbich, Rolf, Dr., Dipl.-Phys., D-2083 Halstenbek (DE); Hänel, Jürgen, Dipl.-Ing., D-2087 Hasloh (DE); Hoener, Siegfried, Dr.-Ing., D-2000 Hamburg 61 (DE); Pridat, Volker, Dipl.-Ing., D-2000 Hamburg 76 (DE)
(74) Vertreter: Patentanwälte Hauck, Graalfs, Wehnert, Döring, Siemons

(56) Entgegenhaltungen:
- EP-A- 0 141 219
- EP-A- 0 201 720
- DE-A- 2 531 057
- DE-A- 2 531 231
- DE-A- 2 912 599
- DE-A- 3 715 025
- DE-A- 3 738 187
- US-A- 4 602 334
- US-A- 4 716 530

## Beschreibung

Die Erfindung betrifft eine Anlage zur Führung von Flurförderzeugen mit wenigstens einem lenkbaren Rad und einer richtungsbestimmenden Signalübertragung auf das Flurförderzeug, mit einem Sensor, welcher mit einer Signalführung, insbesondere Führungsdrahtanordnung im Fahrboden der Anlage zusammenarbeitet, wobei der Sensor zur mittigen Abtastung der Signalführung vorgesehen und mit einer Lenkeinrichtung zur Steuerung des Einschlages lenkbarer Fahrzeugräder des Flurförderzeuges verbunden ist, und ferner in der Anlage Abzweigungen der Signalführung außer einer Geradeausfahrt nach links oder rechts vorgesehen sind.

Solche Anlagen sind in vielfachen Ausführungen auch mit Abzweigungen bekannt. Hierzu wird die DE P 18 06 750 genannt, welche dem Mangel unterliegt, daß Steuerungen für die einzelnen im Boden verlegten Führungsdrahtabschnitte vorhanden sein müssen. Dazu wird einbezogen, daß im Hinblick auf Verzweigungen und Einmündungen Signalempfangseinrichtungen als Wählverbindungseinrichtungen ausgeführt sein können. Die Signalempfangseinrichtungen sind teilweise im Boden jeweils des Schnitt- oder Entscheidungspunktes angeordnet und sprechen auf ein Signal des Fahrzeuges in dem Sinne an, daß ein bisher entregter Leiterabschnitt wieder erregt wird. Hierdurch lassen sich wechselseitige Steuerungen erreichen, wobei auch in der bekannten Ausführung vorgesehen ist, daß bei Kreuzung der erste und zweite Leiterabschnitt jeweils aus im wesentlichen parallelen Leiterstücken bestehen, die über eine bi-stabile Schaltung mit einem Bahnleiter verbunden sind und jeweils eine mono-stabile Schaltung zur Betätigung einer zugeordneten bi-stabilen Schaltung erhalten. Hieraus ergeben sich erhebliche Probleme.

Eine Anlage zur Führung von Flurförderzeugen nach oben genannten Darlegungen ist auch in der DE P 15 30 894 beschrieben. Dort ist im Zusammenhang mit weichenlosen Abzweigungen besonders die Führung eines Fahrzeuges mit einem mechanischen Verbindungselement beachtet. Dieses erfährt eine richtungsbestimmende Voreinstellung durch eine Programmsteuerung, die durch Tastglieder ausgelöst wird, welche vor Abzweigung der Längsführung des Stapelfahrzeuges angeordnet sind. Hierin liegt eine besonders günstige Ausgestaltung für die Anpassung einer Lenkanlage, wobei die Abtastungen Erhöhungen, Vertiefungen oder wahlweise Einflüsse in diesem Sinne aufnehmen können.

Bekannt ist auch eine Steueranordnung für ein als Netz bezeichnetes, geschlossenes Fahrstreckensystem mit mehreren Weichen oder Abzweigungen, welche jeweils eine Wahl von zwei Richtungen zulassen, mit Fahrzeugen, welche eine mit Speichern arbeitende Zielwählvorrichtung aufweisen, durch welche eine bestimmte Zielzone des Fahrstreckensystems einstellbar ist. Die Wahl der Zielzone ist ein besonders wichtiges Merkmal auch im Sinne vorliegender Anmeldung.

In der bekannten Ausführung sind aber auch Betätigungsmittel zur Richtungswahl im Fahrstreckenbereich vorgesehen, wobei eine Zielwählvorrichtung mit Motorbetriebsvorrichtungen insbesondere zum Anhalten des Fahrmotors, verbunden ist. Hierbei wird ein Einfluß auf den Lenkmotor zur Einstellung einer vorbestimmten Abweichung einbezogen. Dieses ist leicht möglich, wenn gemäß der bekannten Ausführung jede Weiche oder Abzweigung mit einer bestimmten Codierung für die Richtungswahl versehen ist und auf dem Fahrzeug eine Empfangseinrichtung in Verbindung mit einer Vergleichsanordnung vorgesehen ist.

In dieser bekannten Ausführung ist eine Sendeeinrichtung an jeder Weiche mit einer vorbestimmten Codierung in Form einer gleichbleibenden Signalfolge mit einer bestimmten Anzahl von seriellen Signalschritten versehen, die wahlweise mit verschiedenen Signalmarkierungen, insbesondere Signalimpulsen verschiedener Dauer, versehen sind, und eine Zielmarkierung ist durch ein zusätzliches Signal innerhalb eines Signalschrittes in einem Bereich vorgesehen, der von den Signalimpulsen freigelassen ist. Von dem Fahrzeug empfängt dabei eine Vergleichsanordnung mit der Zielcodierung Signale, wobei für ein Netz eine Zonensignalfolge mit einer Anzahl von Signalschritten vorgesehen ist, die mindestens der Anzahl der anzufahrenden Zonen in diesem Netz entspricht. Hierbei handelt es sich um eine sehr genau gesteuerte Anlage. In dieser wird auch eine Unterteilung in verschiedene Bereiche einbezogen, in welcher das Fahrstreckensystem in mehrere Netze unterteilt ist, die Netze miteinander verbunden sind und für diese Netze eine zusätzliche Netzsignalfolge mit einer mindestens der Anzahl der Netze entsprechenden Anzahl von Signalschriften vorgesehen sind.

Die dadurch geschaffene Steueranordnung mit einem Zielcode hat dabei den Vorteil, daß einem Fahrzeug ein Startcode einsetzbar ist und nach dessen Auslösung eine Steuerung durch das Zielcode vorgesehen ist.

In einer Anlage zur Führung von Flurförderzeugen ist es durchaus möglich, eine Blockstellensteuerung nach der DE P 18 06 750 vorzunehmen. Dieses widerspricht aber der Grundlage für die erfindungsgemäße Anmeldung, bei welcher die im Boden verlegten Teile einen bestimmten Zustand erund beibehalten.

Ferner ist aus der DE-OS 37 15 025 bekannt, eine in Querrichtung des Fahrzeugs angeordnete Detektoreinheit als Schalterreihe mit Sonden anzuordnen, um Ränder eines Leitelementes abzutasten. Dabei bleibt das Fahrzeug immer über dem Leitelement, und es wird lediglich die Detektoreinheit umgeschaltet, um einmal eine rechte oder zum anderen eine linke Randkante eines streifenförmigen Leitelementes abzutasten. Diese Ausführung ist schon aus Gründen der Auflösung bei einem verhältnismäßig schmalen Leitelement problematisch und durch wechselseitige Einflüsse nicht sicher.

Wenn sich bei Abzweigung gemäß Erfindung eine sich abzweigende Signalführung, insbesondere Führungsdrahtanordnung von dem normalen Führungsdraht löst, dann wird für diese abzweigende Signalführung, insbesondere Führungsdrahtanordnung durchaus eine eigene Speisung einbezogen. Diese Speisung ist aber konstant und erfährt keine Änderungen in Abhängigkeit vom Fahrzeugdurchgang, zumal für letzteren die Lenkrichtungs-Vorsteuerbaugruppe maßgeblich ist, um einer Abzweigung zu folgen oder auf dem bisherigen Kurs geradeaus zu fahren.

Der Erfindung liegt die Aufgabe zugrunde, eine Anlage der eingangs angegebenen Art dadurch zu verbessern, daß bei Verminderung eines Bauaufwandes, wie er bei einer Ausstattung mit zahlreichen Fühlern oder Sonden bzw. Blockstellen üblich ist, und Erhöhung der Fahrsicherheit gegenüber der bei bekannten Ansteuerungen eine Führung von Flurförderzeugen erreicht wird, die auch bei ungünstigen betrieblichen Bedingungen im Zusammenhang mit unsicheren Bodensignalen wegen Verschmutzung eine sichere Geradeaus- oder Seitenführung des Flurförderzeuges gewährleistet.

Eine solche Ausführung war offenbar bisher nicht vorstellbar.

Diese Aufgabe wird erfindungsgemäß dadurch gelöst, daß eine Lenkrichtungs-Vorsteuerbaugruppe zeit- oder wegebemessen einstellbar und eine wegeabhängig kurze oder zeitlich beschränkte Seitenabweichungssteuerung auslösbar ist, wobei die Seitenabweichungssteuerung eine seitliche Versatzgröße zur Signalführung im Fahrboden und die Aufrechterhaltung der Versatzgröße für eine Parallelfahrt zur Signalführung, insbesondere Führungsdrahtanordnung vorsieht. Der Ausdruck Signalführung beinhaltet nicht nur einen Führungsdraht, um welchen ein Feld entwickelt wird, sondern auch reflektierende oder streifenartige Anordnungen, die auf dem Boden verlegt werden und abgetastet werden können. Solche werden durch den im folgenden verwendeten Ausdruck Führungsdraht miterfaßt.

Dadurch wird auch auf der Basis von Abzweigungen der Führungsdrahtanordnung, welche Abzweigungen überhaupt gleiche Führungseinflüsse liefern, die eine Lenkrichtungs-Vorsteuerbaugruppe am Flurförderzeug beeinflussen, um einen bemessenen Lenkeinschlag auszulösen, erreicht, daß der Lenkeinschlag einen seitlichen Versatz zur Führung des Flurförderzeuges an sich im induktiven Führungsfeld steuert bzw. aufrechterhält.

Die Erfindung schafft insofern durch Anfangsauslösung und Einrichtung eines Lenkantriebsrades eine Anlage mit einer Ausführung, durch die das Fahrzeug mit dem Lenkantriebsrad nach einer vorgewählten Seite vom Führungsdraht versetzt wird und mit dieser Versatzgröße so lange parallel zum Führungsdraht geführt wird, bis ein Signal zur Rücksteuerung auf dem Führungsdraht empfangen wird. Die Steuergrößen mit Fahrzeit und Bewegungsstrecke sind dazu angesprochen.

Überraschend arbeitet die Erfindung mit einem Flurförderzeug, welches eine Lenkungsbaugruppe hat, die durch eine Lenkrichtungs-Vorsteuerbaugruppe zeit- oder wegebemessen einstellbar ist, wobei eine kurze oder zeitlich beschränkte Seitenabweichungssteuerung auslösbar ist. Danach erfolgt die Rückstellung des Führungsrades in die Parallelstellung zu einem Führungsdraht.

Dabei wird bevorzugt, daß in der Signalführung, insbesondere Führungsdrahtanordnung ein Signal zur Rücksteuerung auf der mittigen Fahrt über der Signalführung vorgesehen ist.

In einer Anlage mit Identmarkierungsvorrichtungen im Fahrboden liegt eine vorteilhafte Ausgestaltung darin, daß die Identmarkierungsvorrichtungen mit einer Adresse der Abzweigungsanordnung ausgeführt sind und in Abhängigkeit von einem empfangenen Signal eine Steuergröße in die Lenkeinrichtung zur Führung des Fahrzeugs auf einer seitlichen Abstandsfahrt vorgesehen ist und daß eine Signalgabevorrichtung vorgesehen ist, welche die seitliche Auslenkung zur Abstandsfahrt beendet. Durch diese Ausführung ist eine unmittelbare Führung des Fahrzeugs an der richtungsbestimmenden Signalübertragung möglich.

Hierbei sind zweckmäßig die Lenkrichtungs-Vorsteuerbaugruppen durch fahrstreckenbestimmte Markierungen auslösbar.

Besonders bevorzugt wird dabei, daß die Lenkrichtungs-Vorsteuerbaugruppe für ein Führungsrad eine durch Signalabgleich bestimmte seitliche Auslenkung des Führungsrades und dann seine Paralleleinstellung zur Führungsdrahtanordnung vorsieht, wobei in der Lenkrichtungs-Vorsteuerbaugruppe umschaltbare Steuergeber angeordnet sind, die für eine bemessene Zeit oder Weg eine Fahrzeugführung mit bestimmtem Abstand parallel zur Führungsdrahtanordnung vorsehen. Ausdrücklich wird bemerkt, daß der Signalabgleich den Abstand bestimmt, während für die Dauer der seitlich versetzten Abstandsfahrt eine Zeit- oder Wegsteuerung vorgesehen ist.

In diesem Zusammenhang besitzt eine zweckmäßige Ausführungsform der Erfindung eine Zeitsteuerung, die mit Einlauf in eine Abzweigung auslösbar ist und in einer bestimmten Zeit abschaltbar ist, wobei die Abschaltung eine Rückführung und eine mittige, d.h. seitenvorbelastungsfreie Abtastung eines Führungsdrahtes herbeiführt. Dabei wird entsprechend einer anderen bevorzugten Ausführungsform eine Wegsteuerung einbezogen, die mit Einlauf in eine Abzweigung auslösbar und nach einer bestimmten Wegstrecke abschaltbar ist. Durch die Abschaltung wird eine Rückführung zu einer mittigen Abtastung eines Führungsdrahtes ausgelöst. Vorteilhaft ist dabei ein Wegmessungsgerät vorgesehen, das durch einen Schalter in Abhängigkeit von einem Signalempfänger über eine Wegfindungs-Schaltungsbaugruppe und einen Wahlschalter einschaltbar ist.

Eine besonders vorteilhafte Ausführungsform der Erfindung liegt darin, daß am Flurförderzeug mehrere, insbesondere drei Signalgeber für die Lenkeinrichtung vorgesehen sind, welche als Vergleichseinrichtung einerseits eine Einspeisung des Sensorsignals aufweisen und andererseits an Signalquellen angeschlossen sind, von denen eine die mittlere Fahrt über eine Signalführung steuert und die beiden anderen Signaleingaben die eine seitliche Abweichung mit dem Ergebnis einer seitlichen Parallelfahrt steuern.

Durch diese Auswertung insbesondere dreier Signalgeber wird eine besonders genaue Steuerung erreicht. Diese wird noch durch insbesondere drei parallel geschaltete Vergleichseinrichtungen verbessert, die jeweils einen Eingang vom Sensor und einen anderen Eingang von jeweils einer Signalquelle mit einem Signal für Geradeausfahrt, Rechts- oder Linksabzweigung aufweisen. Der Ausdruck "insbesondere" läßt offen, auch mehr als drei Signalgeber und Vergleichseinrichtungen anzuordnen.

Dabei wird einbezogen, daß den mehreren, insbesondere drei Vergleichsvorrichtungen ein Schaltungssteller nachgeschaltet ist, der durch in Abhängigkeit von einer äußeren Identmarke anfallende Signale auslösbar ist und nach Auswertung eines Wegeführungsprogramms einen der Schalter im Sinne einer Schließung betätigt. Hierdurch kann mit geringstmöglichem Einsatz äußerer Mittel jeweils die zu den Vergleichseinrichtungen oder Vergleichsstrecken geltende Marke erreicht werden.

Besonders bevorzugt wird unter vorstehenden Gesichtspunkten daß eine Signalgruppe Abstandsfahrt-Ende vorgesehen und mit dem Signalsteller verbunden ist und daß die Signalgruppe Abstandsfahrt-Ende mit der Wegefind-Baugruppe verbunden ist und mit wenigstens einer Auslöseeinrichtung in wahlweiser Verbindung steht, die eine Signalmarke im Boden im Zusammenhang mit einem fahrzeugeigenen Empfänger, eine fahrzeuginterne Wegmessung und eine fahrzeuginterne Zeitmessung umfaßt. Hierdurch wird eine Beendigung der Abstandsfahrt einbezogen, die gemäß obigen Ausführungen durch einen Lenkimpuls erreicht worden ist, um das wenigstens eine lenkbare Rad seitlich abgesetzt von der Signalführung zu leiten, und zwar so lange, bis in der Führungssteuerung ein besonderes Signal gegeben wird.

Wenn oben im Zusammenhang mit der Erfindung Sensoren angesprochen sind, dann können sie in vielfältiger Weise ausgeführt sein.

Ein bevorzugtes Merkmal der Erfindung liegt allerdings in einem Sensor, wie er an sich bekannt ist aus der DE OS 27 52 027. Dabei besteht der Sensor aus wenigstens zwei Spulen, die senkrecht bzw. waagerecht in gleicher Höhe am Fahrzeug angeordnet sind. Bei dieser Ausführung als Kreuzspule wird die Phasendifferenz zwischen dem in der ersten Spule induzierten ersten Signal und einem aus dem in der zweiten Spule induzierten zweiten Signal durch Phasendrehung in ein drittes Signal umgewandelt, von dem erst eine Stellgröße für ein Lenkbauorgan des Fahrzeuges ausgeht. Eine sogenannte Kreuzspule, wie sie durch den Hinweis auf die erste und zweite Spule beschrieben ist, stellt eine bevorzugte Ausgestaltung dar, weil dadurch, insbesondere im Bereich der Abzweigungen, von Abzweigungssträngen herrührende Felder gegenseitig aufgehoben werden.

Die Erfindung wird im folgenden anhand von Prinzipschaltbildern erläutert, die in der Zeichnung dargestellt sind. In der Zeichnung zeigen:
- Fig. 1: eine Prinzipskizze für einen Kreuzspulen-Sensor;
- Fig. 2: eine Draufsicht auf eine Streckenführung mit einer Führungsdrahtanordnung und Abzweigung, wobei verschiedene Ansichten aus Fig. 3 bis Fig. 8 hervorgehen;
- Fig. 3/Fig. 8: verschiedene Schnittansichten einer Führungsdraht-Anordnung in einer Streckenführung nach Fig. 2;
- Fig. 9: eine Draufsicht auf eine Streckenführung mit beidseitigen Abzweigungen in prinzipieller Darstellung;
- Fig. 10: eine Einzeldarstellung im Schnitt;
- Fig. 11: eine Einzeldarstellung;
- Fig. 12: eine Einzeldarstellung;
- Fig. 13: eine Einzeldarstellung, jeweils im Schnitt längs den Pfeilen X bis XIII in Fig. 9;
- Fig. 14: einen Schnitt längs der Linie XIV-XIV in Fig. 9;
- Fig. 15: einen Schnitt längs der Linie XV-XV in Fig. 9;
- Fig. 16: einen Stromlaufplan zur Steuerung eines Fahrzeuges in einer Anlage, die gemäß vorstehenden Figuren ausgeführt ist.

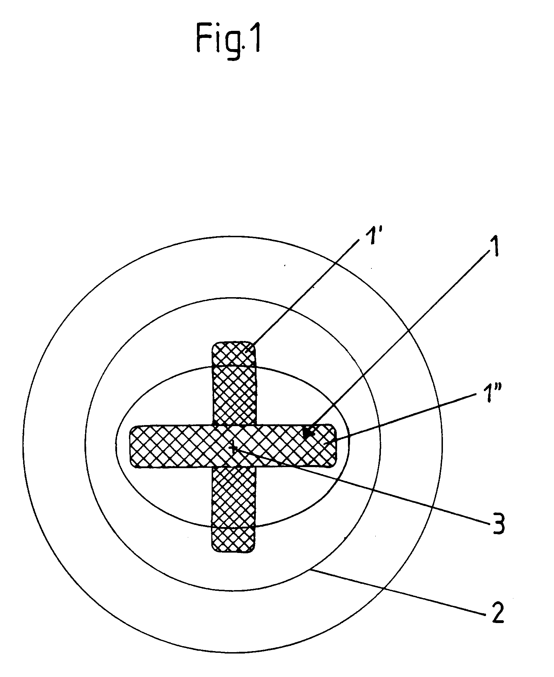

Die Fig. 1 bis 15 sind prinzipieller Art. Fig. 1 zeigt eine Kreuzspule als Sensor 1 in einem Feld 2 um einen mittleren Leiter 3. Eine solche Kreuzspule hat gemäß oben genannten Literaturstellen besondere Vorteile zur präzisen Erfassung der Feldzustände und ihrer Änderungen, weil sich in den vertikal zueinander ausgerichteten Spulen 1', 1'' entgegengesetzte Einflüsse aufheben. Dadurch ist eine ganz besonders genaue Einstellung möglich.

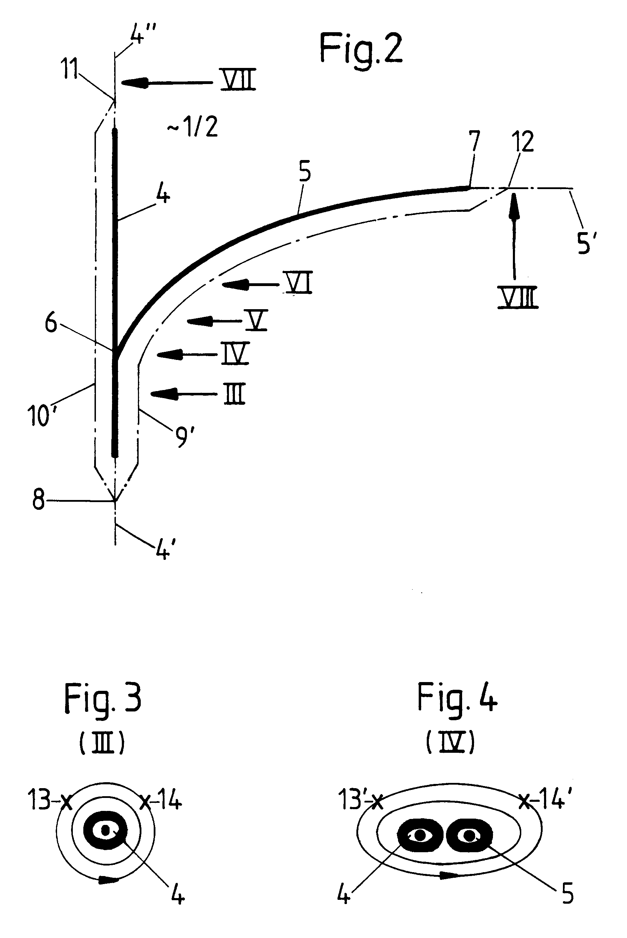

Fig. 2 zeigt eine gradlinig gerichtete Signalführung 4 mit einer abzweigenden Signalführung 5. Im Sinne obiger Ausführungen wird bemerkt, daß die Signalführung in einer vorteilhaften Ausgestaltung aus einem im Boden verlegten elektrischen Leiter bestehen kann, der aufgrund eines Stromdurchflusses ein Feld entwickelt. Unter diesem Gesichtspunkt werden die Ausführungsbeispiele beschrieben.

Der Ausdruck Signalführung beinhaltet aber zugleich auch auf einem Boden verlegte Streckenführungsmittel, die optisch, gegebenenfalls auch in Abhängigkeit vom Material kapazitiv abgetastet werden können. Bei einer optischen Abtastung sind optische Sensoren vorgesehen, die in Abhängigkeit von der Strahlungsaufnahme - reflektiert von der Signalführung - elektrische Steuerimpulse entwickeln. Entsprechendes gilt für eine kapazitive Abtastung unter dem Gesichtspunkt, daß auf dem Boden eine mit einer bestimmten Ladung versehene Signalführungsfolie bzw. ein entsprechendes Band verlegt ist, über welchem das Fahrzeug eine Gegenelektrode führt.

In der üblichen bekannten Ausführung wird das induktive Feld abgetastet.

Bei der Beschreibung der Ausführungsbeispiele wird daher jetzt von einem Führungsdraht 4 und einem abzweigenden Führungsdraht 5 geschrieben, wobei aber für die praktische Ausführung auch die anderen Leitmittel einbezogen sind.

Der abzweigende Führungsdraht 5 kann bei 6 angelötet sein und ist dann mit der gleichen Energie versorgt wie der Führungsdraht 4.

Der abzweigende Führungsdraht 5 kann aber auch für sich in der Erstreckung zu seinem Ende 7 getrennt von dem durchgehenden Führungsdraht geführt und an eine eigene Energiequelle angeschlossen sein. In Abhängigkeit von eingespeisten abtastungsfähigen Signalgrößen findet dann eine Abstimmung in der Auswertungseinrichtung statt. Dadurch lassen sich noch besondere Vorgänge und Befehle verwirklichen, wobei selbst bei Einspeisung von Energie in Führungsdrähte einbezogen wird, daß Signalangaben durch überlagerte Frequenzen gegeben werden können, die dann ausgefiltert werden.

Im folgenden wird der Einfachheit halber angenommen, daß der abzweigende Führungsdraht 5 an die gleiche Energiequelle wie der Führungsdraht 4 angeschlossen ist.

Die Führungsdrähte 4 und 5 zeigen bestimmte Abschnitte in einem Steuerungsbereich. Es ist erkennbar, daß der Führungsdraht auch den vorhergehenden Abschnitt 4' und den nachfolgenden Abschnitt 4'' und der Führungsdraht 5 den nachfolgenden Abschnitt 5' aufweist. Insofern bilden die Führungsdrähte 4, 5 mit der Verbindung 6 eine Gruppe innerhalb der Anschlußsteuerteile 4', 4'', 5'. Vor einer Abzweigungsgruppe mit den Führungsdrähten 4, 5 und der Verbindung 6 ist ein Steuerpunkt 8 angeordnet, der entweder fahrzeugintern signalisiert oder aber durch einen Signalgeber ausgelöst wird, wie es beispielsweise in der DE P 15 30 894 angesprochen ist.

Hierdurch ergibt sich ein Befehl für einen seitlich beschränkten Lenkausschlag nach rechts oder links, so daß die Mitte des Fahrzeugs, die zunächst über den Führungsdraht 4, beispielsweise im Bereich von 4′ läuft, nach rechts oder links seitlich versetzt wird und dabei auf eine Abstandsspur 9′ nach rechts oder 10′ nach links gebracht wird, in welcher die Sensoren am Fahrzeug die von den Führungsdrähten 4, 5 aufgenommenen Signale so auswerten, daß das Fahrzeug selbst mit seiner Mitte seitlich versetzt auf einer der Abstandsspuren 9′ oder 10′ fährt.

Aufgrund dieser seitlichen Versetzung in eine Abstandsspur folgt dann das Fahrzeug je nach Richtung der Versetzung entweder in Geradeausfahrt dem Führungsdraht 4 zum Abschnitt 4˝ oder aber dem Führungsdraht 5 zum Abschnitt 5′, wobei letzten Endes nach Durchlauf durch die Abzweigungsstrecke an den Punkten 11 und 12 die seitliche Abstandsfahrt beendet wird und die Mitte des Fahrzeuges wieder über die Führungsdrähte 4, 5 bzw. dann die sogenannten Führungsdrahtabschnitte 4˝ und 5′ gelangt.

Durch die seitlichen Versetzungen, einerseits 9′, andererseits 10′, wird mit Sicherheit die beabsichtigte Fahrstreckenverfolgung gewährleistet.

Aus den Fig. 3 bis 8 ist dabei erkennbar, daß bei Einsatz nur eines Sensors, was für eine Ausführung zugrunde gelegt wird, um Irrsteuerungen auszuschalten, eine sichere Fahrzeugführung auf der beabsichtigten Strecke möglich ist.

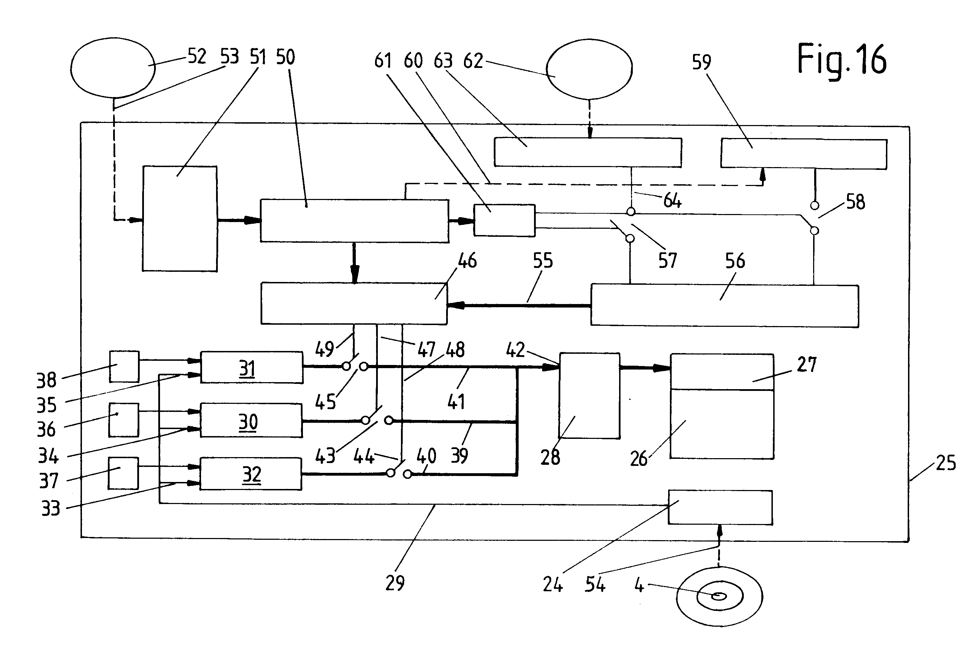

In Fig. 3 gemäß Schnitt III ist erkennbar, daß der Sensor aus der Mittelstrecke über den Führungsdraht 4 seitlich versetzt wird, und zwar an die Stellen entweder 13 oder 14. Der Abstand zum Führungsdraht 4, d.h. zum Mittelpunkt der Darstellung in Fig. 3, ist der gleiche, nur ist es zur Steuerung der Geradeausfahrt oder Abbiegung erforderlich, daß die Seitenversetzung den Sensor, der durch ein x dargestellt ist, bei 13 nach links und 14 nach rechts gegenüber dem Führungsdraht versetzt ist, so daß dadurch verschiedene aufgenommene und in die Steuerung eingehende Werte aufgenommen werden. Dazu wird zur Auswertung noch auf Fig. 16 verwiesen.

Entsprechend ist im Bereich des Schnittes IV nach Fig. 4 schon die Aufgliederung in die zwei Führungsdrähte 4 und 5 erkennbar, wobei dann die Abtaststrecke des Sensors an der Unterseite des Fahrzeuges bei 13′ oder 14′ verläuft. Es liegt jeweils der gleiche Abstand zum benachbarten Führungsdraht, allerdings in verschiedener Richtung vor.

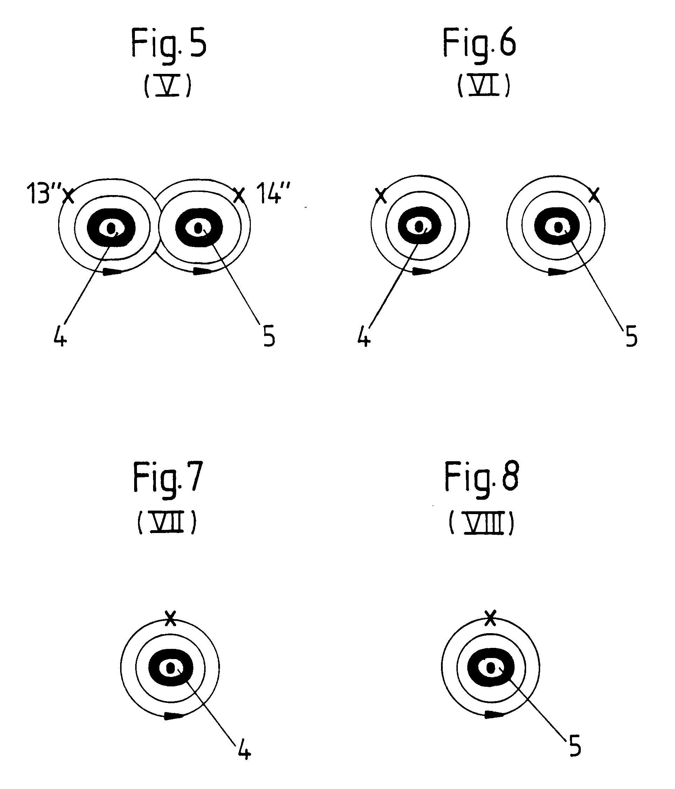

Dieses trifft auch für die Lage bei V nach Fig. 5 zu. Dabei ist durchaus erkennbar, daß der Sensor x bei 13˝ oder 14˝ angeordnet ist und somit jeweils an der Außenseite eines Führungsdrahtes 4, 5 bzw. benachbarter Führungsdrähte ihrem Weg folgend und damit auch das Fahrzeug entsprechend lenkt. In diesem Zusammenhang wird in die Steuerung einbezogen, daß der Feldlinienverlauf aus Sicherheitsmaßnahmen in die Sensorwirkung einbezogen wird insofern, daß die Feldlinien bezüglich des Sensors 13˝ und 14˝ verschieden gerichtet sind.

In VI gemäß Fig. 6 sind die beiden Führungsdrähte 4 und 5 schon weit voneinander entfernt, so daß die sich darum entwickelten Felder voneinander getrennt sind und die Sensoren x jeweils nur von einem Feld beeinflußt werden können, so daß in diesem Zusammenhang eine eindeutige Fahrzeugführung gesteuert wird.

Fig. 7 zeigt bei VII den gradlinigen Weiterlauf des Führungsdrahtes 4 im Bereich des Abschnittes 4˝, wobei dann in Fahrtrichtung hinter dem Rückführungspunkt 11 für die seitliche Abstandsfahrt 10′ auch der fahrzeugmittig angeordnete Sensor wieder über dem Führungsdraht 4 zur Steuerung des Fahrzeuges angeordnet ist. Fig. 8 zeigt das entsprechende Bild am Führungsdraht 5 bzw. im Bereich des Abschnittes 5′, so daß dann der gradlinige Weiterlauf bei 12 mit dem mittig angeordneten Sensor über dem Führungsdraht 5 vorhanden ist. Die Rückführung der seitlichen Versetzung ergibt sich dabei anhand der Fig. 16 aufgrund einer zeit- oder wegeabhängigen Steuerung, d.h. der seitliche Versatz ist nur zur Sicherheit der Abzweigungsfunktion im Bereich einer Abzweigung vorgesehen.

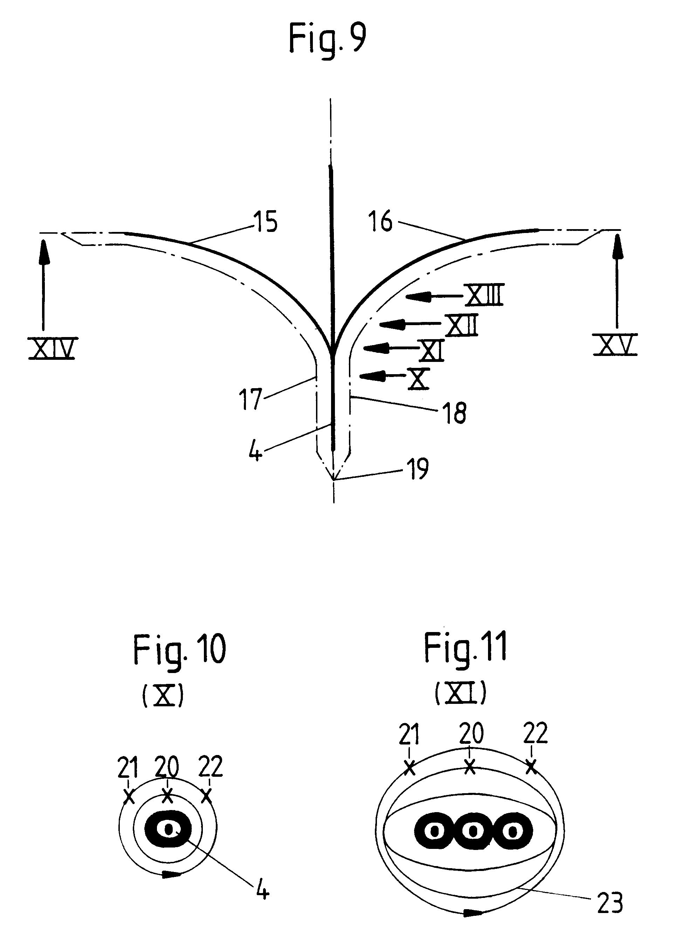

Obiges trifft auch auf die Ausführung nach Fig. 9 und die angeschlossenen Figuren zu. Der gradlinig gerichtete Führungsdraht sei auch hier mit 4 bezeichnet, jedoch in der einen Abzweigung der diesbezügliche Führungsdraht mit 15 und in der anderen Abzweigung der diesbezügliche Führungsdraht mit 16. Bei dieser Ausführung nach Fig. 9 mit zweiseitigen Abzweigungsmöglichkeiten bleibt der nicht dargestellte Sensor am Fahrzeug bei Geradeausfahrt auf dem Führungsdraht 4 bzw. einem entsprechenden Führungsleitmittel. Nur bei einer signalisierten Abzweigung nach links oder nach rechts ergibt sich die Seitenversetzung mit seitlich versetzten Abstandsfahrten entsprechend der Abstandsfahrtstrecken 17 und 18 je nach der Richtung der beabsichtigten Abzweigungen. Dieses bedeutet, daß das Fahrzeug mit seinem Sensor am eingezeichneten Punkt 19 seitlich zu einer Abstandsfahrt versetzt wird, wenn eine Abzweigung wahrgenommen werden soll.

Diese seitlichen Abstandsfahrtstrecken 17, 18 werden bei 19 ausgelöst, und zwar entweder dadurch, daß dem Fahrzeug von einer äußeren Identmarke die Abzweigung signalisiert wird oder aber durch einen inneren Programmgeber die seitliche Versetzung ausgelöst wird.

Insofern zeigt Fig. 10 entsprechend der Darstellung zunächst noch eine Geradeausfahrt des Sensors x bei 20 über den Führungsdraht 4. Wenn aber bei 19 schon eine Steuerung stattgefunden hätte, könnte der Sensor x statt an der Stelle 20 bei Linksfahrt an der Stelle 21 zur Verfolgung einer Abstandsfahrtstrecke 17 oder bei 22 nach rechts zur Verfolgung einer Abstandsfahrstrecke 18 angeordnet sein.

Diese Bedingungen werden durchaus auch noch im Bereich bei Fig. 11 aufrechterhalten, wobei infolge der engen Zusammenlage der nun vorhandenen drei Führungsdrähte noch ein gemeinsames Feld 23 entwickelt wird. Aber auch unter diesem Feld nehmen die Sensoren in ihren Stellungen 20, 21, 22 verschiedene Einflüsse auf, um die Abstandsfahrten oder die Geradeausfahrt zu gewährleisten.

In diesem Zusammenhang sei vorausgeschickt, daß ein Sensor in der Lage 20 so gesteuert ist, daß sie immer größtmögliche Steuerenergie aufnimmt und bei Energieabnahme von der einen oder anderen Seite daher zur Mitte nachgesteuert wird.

Die bei 21 und 22 angeordneten Sensoren arbeiten anders. Bei Abweichung des Fahrzeuges nach außen nimmt die aufgenommene Energie ab. Bei Pendlung des Fahrzeuges nach innen, d.h. zur Mitte hin, nimmt die aufgenommene Energie zu. Infolgedessen ist für die Lage des Sensors bei 21 und 22 eine andere Steuerung vorgesehen, welche für die Bahnverfolgung durchaus eine Mittelgröße aufnimmt und als maßgeblich auswertet in dem Sinne, daß eine Energieerhöhung eine Lenkung zur einen Seite hin und eine Energieabnahme eine Lenkung zu einer anderen Seite bewirkt und dadurch ein Ausgleich herbeigeführt wird. Hier werden sich ändernde Bedingungen zur Steuerung nach verschiedenen Seiten ausgenutzt, während beim Betrieb des Sensors bei 20 immer eine Abschwächung der Energie eine Nachsteuerung im Sinne der Energieerhöhung herbeiführt.

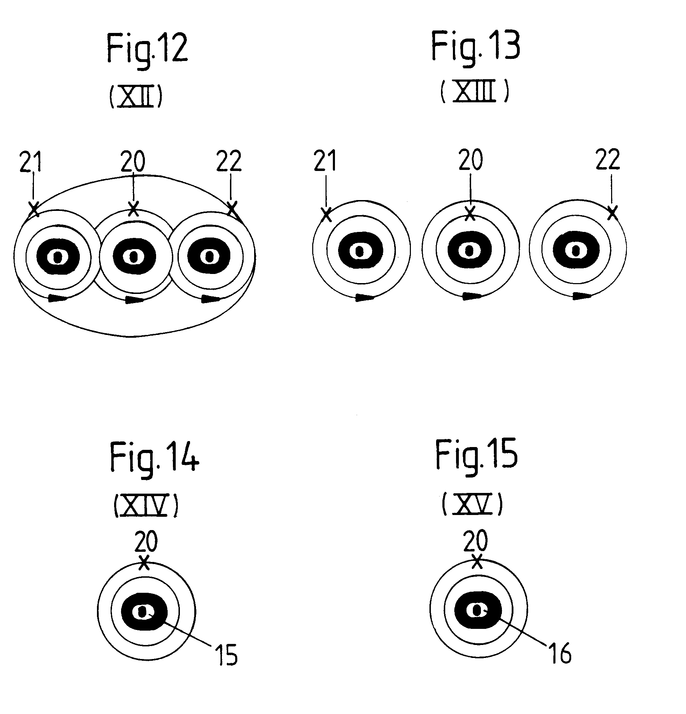

Unter obigen Gesichtspunkten zeigt eben auch die Fig. 12 eine entsprechende Sensoranordnung über drei weiter voneinander entfernten Führungsdrähten entsprechend der Darstellung im Schnitt gemäß XII. Gleiches gilt für die Fig. 13.

In dieser ist schon davon auszugehen, daß der Sensor x je nach dem Vorsteuer-Einfluß an den Stellen 21, 20 oder 22 angeordnet und somit einem ganz bestimmten Führungsdraht bzw. Führungsdrahtabschnitt zugeordnet ist. Damit haben sich alle gemeinsamen Felder gelöst und die Versetzung an den Abzweigungsabschnitten nach außen gibt Signalgrößen, die mit Sicherheit die Verfolgung einer richtigen Abzweigung gewährleisten. Dieses kommt dann durch die Fig. 14 und 15 zum Ausdruck, in welchen der eine Sensor x bei 20 jeweils über dem einen Führungsdraht 15 bzw. 16 gezeigt ist.

Durch die Abstandsfahrstrecken 9′, 10′, 17, 18 wird mit einfachen Mitteln unter Ausschließung betriebsmäßiger Verschmutzung von Fahrboden-Abdeckungen, optischen Führungselemente und dergleichen, auch unter Einbeziehung solcher, eine besonders sichere Abstandssteuerung erreicht, auch wenn die Abstandsfahrstrecken nur in der Größenordnung von 20 bis 120 mm gegenüber den Führungsdrähten seitlich versetzt werden. Ein Abstand z.B. in der Größenordnung von 50 mm stellt bei Lagerfahrzeugen, die eine Breite von 2 m haben können, einen ganz geringen Aufwand dar, so daß die gewonnene Sicherheit für die einwandfreie Führung in Abzweigungen überraschend ist.

Bisher wurden lediglich die Signalführungen in Form von Führungsdrähten und somit auch die Führung eines Fahrzeuges mit einem mittig angeordneten und nach unten gerichteten Sensor beschrieben. Erwähnt sind dabei die Steuerpunkte 8 oder 19, von denen die seitlichen Abstandsfahrten ausgehen. Nicht gezeigt sind, was aber aus dem einleitenden Stand der Technik hervorgeht, daß zur Auslösung Bodenmarkierungen mechanischer, optischer oder auch elektrischer Art, gegebenenfalls nach Art eines Magnetfeldes, auch in Form verschlüsselter Frequenzen, möglich sind. Die Beendigung der Abstandsfahrten bei 11, 12 oder in dem Bereich der Fig. XIV oder XV in Fig. 9 kann in verschiedener Weise stattfinden, wie aus der folgenden Beschreibung einer Fahrzeugsteuerung hervorgeht.

Das Fahrzeug selbst ist nicht gezeichnet. Es fährt auf Rädern; es kann ein Dreirad- oder Vierradfahrzeug sein. In der Nähe der Lenkachse oder eines lenkbaren Rades hat das Fahrzeug einen nach unten gerichteten Sensor 24, der mit einem Führungsdraht, beispielsweise 4, und dem ihn umgebenden elektro-mechanischen Feld zusammenwirkt. Der Sensor 24 ist innerhalb der Umrißlinie 25 angeordnet, die die Fahrzeugbegrenzung darstellen soll. In dem Fahrzeug befindet sich die eigentliche Lenkung 26, d.h. der Steuerkopf für einen Antrieb und um eine senkrechte Achse drehbares Antriebsrad, wobei der Lenkungseinfluß den Lenkungsmotor 27 anregt. Diese Anregung erfolgt über einen Stellgrößenwandler 28.

Der Sensor 24 ist über eine Leitung 29 mit drei Vergleichern 30, 31, 32 verbunden, wobei die Leitung 29 Abzweigungen 33, 34, 35 in jedem Vergleicher hat. Jeder Vergleicher ist im übrigen mit einer eigenen Signalquelle 36, 37, 38 verbunden, über welche eine besondere Signalgröße eingespeist wird, wobei in dem mittleren Vergleicher 31 die Signalquelle 36 einen Mittelwert bzw. eine Signalgröße 0 einspeist, während die äußeren Signalquellen 37, 38 entgegengesetzt gerichtete Signalgrößen, beispielsweise plus 20 und minus 20 einspeisen, um in Abhängigkeit davon jeweils eine seitliche Abstandsfahrt gemäß obiger Beschreibung auszulösen, wenn die entsprechende Steuersignalverbindung zum Stellgrößenwandler 28 durchgeschaltet ist. Die Steuersignalverbindungen sind mit 39, 40, 41 bezeichnet und vor dem Stellgrößenwandler 28 an dessen Eingang 42 zusammengeschlossen. In den Steuersignalverbindungen 39 bis 41 befinden sich Schalter 43, 44, 45, die mit einem Schaltersteller 46 über Funktionsverbindungen 47, 48, 49 verbunden sind. Dieser Schaltersteller ist mit einer Schaltungsbaugruppe 50 "Wegfindung" verbunden. Diese Schaltungsbaugruppe beinhaltet einen Mikrocomputer, gegebenenfalls mit entsprechendem Programm.

Diese Schaltungsbaugruppe 50 "Wegfindung" steht über die eingezeichnete Funktionsleitung mit einem Empfänger 51 in Verbindung, der entsprechend dem Sensor 24 am Fahrzeug seitlich einer normalen Geradeausfahrt zum Boden gerichtet ist und Signale einer Identmarke 52 aufnimmt. Der Signalfluß, beispielsweise in Form einer induktiven Beeinflussung ist durch die gestrichelte Linie 53 dargestellt, wie auch der Sensor 24 vom Führungsdraht entsprechend durch die gestrichelte Linie 54 entsprechend der Feldeinstellung beeinflußt wird.

Die Identmarke kann auch mechanisch oder optisch einwirken, wie oben beschrieben ist. Insofern ist 51 auch lediglich als Empfänger bezeichnet. Dieser Ausdruck ist nicht auf den Empfang elektrischer oder Hochfrequenzsignale beschränkt, sondern er kann auch mechanische Impulse gemäß dem einleitenden Stand der Technik aufnehmen.

Wenn das Fahrzeug längs des Führungsdrahtes fährt und über den Sensor 24 Signale empfängt, wird über die Leitung 29 der sogenannte Abstands-Ist-Wert den Vergleichern 30 bis 31 zugeführt. Die Identmarke 52 signalisiert nun entweder Geradeausfahrt oder eine Abzweigung mit seitlicher Abstandsfahrt. Dieses Signal geht in die "Wegfindung" 50 ein, welche den Schaltersteller 46 betätigt, so daß beispielsweise im Vergleich mit Fig. 9 bei Geradeausfahrt der Schalter 43 geschlossen wird, bei einer seitlichen Abstandsfahrt 17 oder 18 aber einer der Schalter 44 oder 45 geschlossen wird. Dadurch findet die oben erwähnte Verarbeitung der vom Sensor empfangenen Signale zur Steuerung des Lenkmotors 27 statt.

Es versteht sich, daß im Falle einer nur nach einer Seite vorgesehenen Abzweigung gemäß Fig. 2 nur ein für die Abzweigung Fahrt vorgesehener einzelner Schalter je nach Richtung 44 oder 45 zu betätigen ist.

Aus den Fig. 2 und 9 ist erkennbar, daß die seitlich versetzten Abstandsfahrten nur eine bestimmte Zeit dauern, wonach dann der Fahrzeugsensor 24 und damit auch das Fahrzeug wieder mittig geführt wird. Das Ende der Abstandsfahrt, beispielsweise bezüglich Fig. 2 an den Punkten 11 und 12, wird entweder im Fahrzeug oder von außen signalisiert. Für die funktionelle Durchführung wird dabei der Schaltersteller 46 übereine Funktionsleitung 55 von einem Signalgeber 56 "Abstandsfahrt-Ende" beeinflußt, um jeweils Seitenfahrten bestimmende Schalter 45, 44 wieder zu öffnen und den für Geradeausfahrt zuständigen Schalter 43 zu schließen.

Der Signalgeber 56 kann wahlweise nach Ausführungsbeispiel über zwei Schalter 57, 58 betätigt werden. Der Schalter 58 steht mit einem Wegmessungsgerät 59 am Fahrzeug in Verbindung. Dieses Wegmessungsgerät kann aus einer mitlaufenden Rolle bestehen oder es nimmt bei industriellen Lagerfahrzeugen die Drehzahl eines mittleren Rades auf, wobei in diesem Fall eine Wegmessung deshalb möglich ist, weil solche Fahrzeuge auf inkompressiblen Bandagen fahren. Diese Wegmessung wird angeregt durch eine Zwischenfunktionsverbindung 60 von der Schaltungsbaugruppe 50, nämlich in Abhängigkeit davon, wann die seitliche Abstandsfahrt ausgelöst wird. Erst von diesem Zeitpunkt an ist die Wegmessung ein maßgeblicher Funktionssignalgeber, der im übrigen von einem Wahlschalter 61 ausgelöst wird, welcher seinerseits wiederum von der Schaltungsbaugruppe 50 angesteuert wird.

Es besteht die Möglichkeit, an Stelle der Wegmessung auch eine Zeitmessung einzuführen, die in Abhängigkeit vom Beginn einer seitlichen Abstandsfahrt auslösbar ist und dann nach einem Zeitablauf den Signalgeber 56 für Abstandsfahrt-Ende auslöst. Hierbei können gewisse Unsicherheiten in Abhängigkeit von der Bodenbeschaffenheit einer Fahrplattform bzw. auch der Radoberflächen vorhanden sein. Deshalb ist dieses nicht näher beschrieben, wird aber einbezogen.

Eine sichere Signalgebung arbeitet mit einer äußeren Markierung 62 auf der Fahrfläche entsprechend der zuvor beschriebenen Identmarkierung 52 zusammen. Diese Markierung ist beispielsweise nach Fig. 2 bei 11 oder 12 angeordnet. Sie kann in Abhängigkeit von dem zugeordneten Signalaufnehmer 63 im Fahrzeug bei korrespondierender Ausführung desselben mechanisch, optisch oder elektrisch ausgeführt sein. Bei Eingabe eines Signals wird dieses Signal durch den dann geschlossenen Schalter 57 über die Leitung 64 in den Signalgeber 56 "Abstandsfahrt-Ende" gegeben. Der Wahlschalter 61 wählt für den jeweiligen Einsatz aus, ob bezüglich des Ausführungsbeispiels der Signalaufnehmer 63 mit einer äußeren Signalquelle in Form der äußeren Markierung 62 oder aber einer inneren Meßanordnung entsprechend dem Einsatz des Wegmessungsgerätes 59 wirksam sein soll. Einer der Schalter 57, 58 ist somit zur Funktion geschlossen.

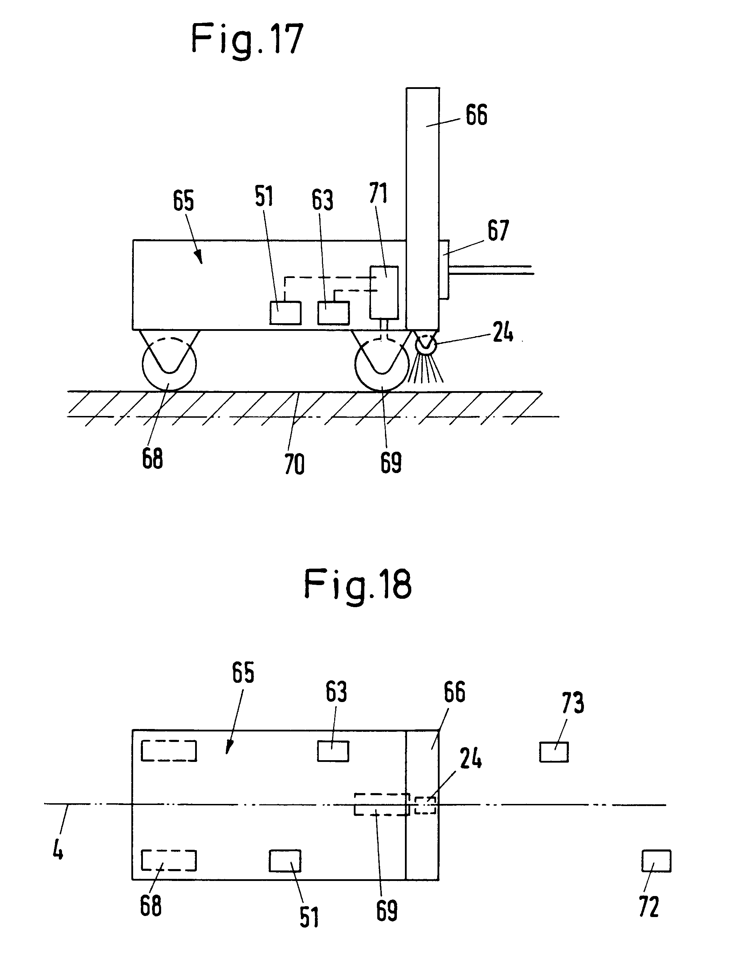

Die Figur 17 zeigt ein Flurförderzeug 65 mit einem Hubgerüst 66, in welchem ein Lastträger 67 höhenbeweglich geführt ist und welcher zwei Räder 68 nebeneinander an einem Ende, gegebenenfalls auch in Form von Nachlaufrollen und am vorderen Ende ein lenkbares Antriebsrad 69 hat. An diesem Flurförderzeug ist ein Fahrzeugsensor 24 angeordnet, welcher mit einer Signalführung 4 im Boden zusammenwirkt. Diese Signalführung 4 kann als Leitelement für optische oder elektromagnetische Abtastung ausgeführt sein. Es ist insbesondere ein im Fahrboden verlagerter Draht, der mit entsprechenden Signalen gespeist wird.

Außerdem sind am Fahrzeug seitlich zur Mittellinie versetzt Identmarken 52 angeordnet, für welche im Fahrzeug ein Empfänger 51 vorgesehen ist. Ferner sind weiter äußere Markierungen vorgesehen, für welche im Fahrzeug darüberhinaus ein Signalaufnehmer 63 angeordnet ist. Es versteht sich, daß 51 und 63 zumindest in gestaffelter Anordnung zu einer Fahrzeugseite hin an einer Seite oder an verschiedenen Fahrzeugseiten vorgesehen sind, um nämlich seitlich der insbesondere mit Führungsdrähten ausgeführten Signalführung beispielsweise mit wenigstens einem Führungsdraht 4 ausgeführten Signalführung Signale von Identmarkierungen aufnehmen zu können, die seitlich der Signalführung mit bestimmten Adressen/Informationen angeordnet sind. Durch diese Baugruppen 51, 63 wird einerseits die Lenkung des Fahrzeuges beeinflußt, was für die Erfindung maßgeblich ist und andererseits aber auch ein Antrieb 71 für das lenkbare Antriebsrad 69.

Die Figur 18 zeigt eine schematische Draufsicht aus der erkennbar ist, daß das insgesamt mit 65 bezeichnete Flurförderzeug durch den mittig angeordneten Fahrzeugsensor 24 auf der Signalführung 4 in Form eines Signaldrahts geführt wird. An den Fahrzeugseitenrändern sind die Empfänger 51 bzw. Signalaufnehmer 63 an verschiedenen Seiten angeordnet, um mit Identmarkierungen neben dem Führungsdraht 4 der Signalführung zusammenzuwirken. Solche Identmarkierungen sind im entsprechenden Abstand wie der Empfänger 51 bzw. des Signalaufnehmers 63 von der Mittellinie des Fahrzeuges 65 in bezug zu dem Führungsdraht 4 der Signalführung angeordnet. Beispielsweise sind zwei solche Identmarkierungen mit 73 und 72 bezeichnet.

Die gestaffelte Anordnung der Teile der Identmarkierungen 73 und 72 zeigt die Möglichkeit, auf diese Weise auch eine Rückstellung nach einer gewissen seitenversetzten Fahrt zu signalisieren.

Zur Funktion ist davon auszugehen, daß einer Signalführung 4 nur ein nach unten gerichteter Sensor 24 am Fahrzeug zugeordnet ist. Wenn durch eine Identmarke 52 ein Seitenausschlag der Steuerung 26 für den Lenkungsmotor 27 eingegeben wird, dann erfolgt je nach des übermittelten Signals der Identmarke 52, deren Funktionssignal beispielsweise moduliert sein kann oder numerischer Art ist, auch eine Richtungsbestimmung. Nach der Geradeausfahrt über den geschlossenen Schalter 43 öffnet dann dieser Schalter 43 und einer der Schalter 45 oder 44 wird geschlossen, so daß dann in die Signalübermittlung aus dem Sensor 24 ein zusätzlicher Wert aus den Signalquellen 37 oder 38 aufgeschaltet wird. Dieser zusätzliche Wert kann eine zusätzliche Plus- oder Minusspannung sein. Je nach Richtung der Abweichung oder aber auch ein numerischer Wert, wenn die Steuerung numerisch durchgeführt wird.

Die Plus- oder Minusspannung kann Werte in der Größenordnung von 10 Volt aufweisen, insbesondere für die Signalquellen 37 und 38 und die Signalquelle 36 ein Wert von 5 Volt für die Geradeausfahrt.

In Abhängigkeit davon, wird das lenkbare Antriebsrad 69 entsprechend nach einer Seite ausgelenkt, und zwar so lange bis in den Vergleichern 31 oder 32 wiederum das Gleichgewicht hergestellt ist.

Bei der Auslösung der Seitenabstandsfahrt durch eine Identmarkierung kann die Fahrzeugsteuerung so ausgelegt werden, daß das lenkbare Rad 69 einen Winkelausschlag in bezug zur Fahrtrichtung in der Größenordnung von 30° erhält. Dieser Einschlag wird dann durch die Vergleichseinrichtungen 31, 32 in Abhängigkeit von der Größe des Gegensignals in den Signalquellen 37, 38 auf Parallelfahrt zurückgeführt bis ein Gleichgewicht in der Steuerung hergestellt ist.

Bei der Herstellung des Gleichgewichts wird das Antriebsrad 69 zur Abstandsfahrt zurückgestellt. Diese Abstandsfahrt findet so lange statt, bis entweder durch eine Identmarkierung 62 am Ende der Abstandsfahrtstrecken 17, 18 oder durch ein Wegmeßgerät oder eine Zeitsteuerung aus dem Gerät 59, das sowohl die Möglichkeit der Anordnung eines Wegmeßgerätes als auch die Möglichkeit der Anordnung einer Zeitsteuerung einbezieht, die Rückstellung signalisiert wird. Dadurch wird durch den Signalgeber 56 für Abstandsfahrten der Schaltersteller 46 mit einem Signal versehen, durch welches der Schaltersteller den jeweils geschlossenen Schalter 44 oder 45 wieder öffnet und den Schalter 43 für Geradeausfahrt schließt.

Im Falle einer numerischen Ansteuerung wird einbezogen, daß im Fahrzeug eine Zielkodierung angeordnet ist, wie sie beispielsweise aus der DE-PS 21 37 864 hervorgeht. Bei Anwendung einer solchen Zielkodierung erübrigt sich eine beidseitige Anordnung von Identmarkierungen 73, 72 nach Figur 18. Es genügt eine Identmarkierung, beispielsweise 73, an einer Seite und damit auch ein Signalaufnehmer 63 an nur einer Seite des Fahrzeuges.

Durch die Vergleicher 30 bis 31 ergibt sich die seitliche Versetzung der seitlichen Abstandsfahrt aus den Signalquellen 36 bis 38, die den Vergleichern zugeschaltet sind bzw. zuschaltbar sind, wobei die Werte so aufeinander abgestimmt sind, daß vorzugsweise ein seitlicher Versatz in der Größenordnung von etwa 50 mm erfolgt.

Eine Zeitsteuerung ist zur Bemessung der Fahrt weniger wichtig, als die Wegmessung für das Wegmeßaggregat, das deshalb mit 59 bezeichnet ist.

Wenn oben von einem Wegmesser die Rede ist, versteht es sich, daß es sich hierbei um ein bekanntes Gerät handeln kann, das die Umlaufzählung insbesondere des Antriebsrades durch Inkrementsummierung mißt. Solche Vorrichtungen sind bekannt.

## Patentansprüche

1. Anlage zur Führung von Flurförderzeugen (65) mit wenigstens einem lenkbaren Rad (69) und einer richtungsbestimmenden Signalübertragung auf das Flurförderzeug, mit einem Sensor (24), welcher mit einer Signalführung (4, 5, 6; 15, 16), insbesondere Führungsdrahtanordnung im Fahrboden der Anlage zusammenarbeitet, wobei der Sensor (24) zur mittigen Abtastung der Signalführung (4, 5, 6; 15, 16) vorgesehen und mit einer Lenkeinrichtung (26) zur Steuerung des Einschlages lenkbarer Fahrzeugräder (69) des Flurförderzeuges verbunden ist, und ferner in der Anlage Abzweigungen der Signalführung (4, 5, 6; 15, 16) außer einer Geradeausfahrt nach links oder rechts vorgesehen sind, dadurch gekennzeichnet, daß eine Lenkrichtungs-Vorsteuerbaugruppe zeit- oder wegebemessen einstellbar und eine wegeabhängig kurze oder zeitlich beschränkte Seitenabweichungssteuerung auslösbar ist, wobei die Seitenabweichungssteuerung eine seitliche Versatzgröße zur Signalführung (4, 5; 15, 16) im Fahrboden und die Aufrechterhaltung der Versatzgröße für eine Parallelfahrt zur Signalführung, insbesondere Führungsdrahtanordnung (4, 5; 15, 16) vorsieht.

2. Anlage nach Anspruch 1, dadurch gekennzeichnet, daß in der Signalführung, insbesondere Führungsdrahtanordnung ein Signal zur Rücksteuerung auf der mittigen Fahrt über der Signalführung vorgesehen ist.

3. Anlage nach Anspruch 1 oder 2 mit Identmarkierungsvorrichtungen im Fahrboden, dadurch gekennzeichnet, daß die Identmarkierungsvorrichtungen mit einer Adresse der Abzweigungsanordnung ausgeführt sind und in Abhängigkeit von einem empfangenen Signal eine Steuergröße in die Lenkeinrichtung (26) zur Führung des Fahrzeugs auf einer seitlichen Abstandsfahrt (9′, 10′)vorgesehen ist und daß eine Signalgabevorrichtung (11, 12) vorgesehen ist, welche die seitliche Auslenkung zur Abstandsfahrt beendet.

4. Anlage nach Anspruch 3, dadurch gekennzeichnet, daß die Lenkrichtungs-Vorsteuerbaugruppen (31, 32; 37, 38) durch fahrstreckenbestimmte Markierungen (52) auslösbar sind.

5. Anlage nach einem der Ansprüche 1 bis 4, dadurch gekennzeichnet, daß die Lenkrichtungs-Vorsteuerbaugruppe für ein Führungsrad eine durch Signalabgleich bestimmte seitliche Auslenkung des Führungsrades und dann seine Paralleleinstellung zur Signalführung, insbesondere Führungsdrahtanordnung (4, 5; 15, 16) vorsieht, wobei in der Lenkrichtungs-Vorsteuerbaugruppe umschaltbare Steuergeber angeordnet sind, die für eine bemessene Zeit oder Weg eine Fahrzeugführung mit bestimmtem Abstand parallel zur Signalführung, insbesondere Führungsdrahtanordnung vorsehen.

6. Anlage nach einem der Ansprüche 1 bis 3 und 5, mit einer Zeitsteuerung, dadurch gekennzeichnet, daß eine Zeitsteuerung mit Einlauf in eine Abzweigung auslösbar und in einer bestimmten Zeit abschaltbar ist, wobei die Abschaltung eine Rückführung und eine seitenvorbelastungsfreie Abtastung einer Signalführung, insbesondere eines Führungsdrahtes herbeiführt.

7. Anlage nach Anspruch 5, gekennzeichnet durch eine Wegsteuerung, die mit Einlauf in eine Abzweigung auslösbar und nach einer bestimmten Wegstrecke abschaltbar ist, und durch Auslösung einer Rückführung zu einer mittigen Abtastung einer Signalführung, insbesondere eines Führungsdrahtes durch die Abschaltung.

8. Anlage nach Anspruch 5 oder 7, gekennzeichnet durch ein Wegmessungsgerät (59), das durch einen Schalter (59) in Abhängigkeit von einem Signalempfänger (51) über eine Wegfindungs-Schaltungsbaugruppe (50) und einen Wahlschalter (61) einschaltbar ist.

9. Anlage nach einem der Ansprüche 1 bis 7, dadurch gekennzeichnet, daß am Flurförderzeug mehrere, insbesondere drei Signalgeber für die Lenkeinrichtung (26) vorgesehen sind, welche als Vergleichseinrichtung einerseits eine Einspeisung des Sensorsignals aufweisen und andererseits an Signalquellen (36 -38) angeschlossen sind, von denen eine die mittlere Fahrt über eine Signalführung steuert und die beiden anderen Signaleingaben die eine seitliche Abweichung mit dem Ergebnis einer seitlichen Parallelfahrt steuern.

10. Anlage nach Anspruch 9, dadurch gekennzeichnet, daß die Vergleichseinrichtungen (30 - 32) jeweils einen Eingang vom Sensor (24) und einen anderen Eingang von jeweils einer Signalquelle (36 - 38) mit einem Signal für Geradeausfahrt, Rechts- oder Linksabzweigung aufweisen.

11. Anlage nach Anspruch 10, dadurch gekennzeichnet, daß den mehreren, insbesondere drei Vergleichsvorrichtungen (30 - 32) ein Schaltsteller (46) nachgeschaltet ist, der durch in Abhängigkeit von einer äußeren Identmarke (52) anfallende Signale auslösbar ist und nach Auswertung eines Wegeführungsprogramms einen der Schalter (43 - 45) im Sinne einer Schließung betätigt.

12. Anlage nach einem der Ansprüche 2 - 11, dadurch gekennzeichnet, daß eine Signalgruppe Abstandsfahrt-Ende (56) vorgesehen und mit dem Schaltersteller (46) verbunden ist und daß die Signalgruppe Abstandsfahrt-Ende (56) mit der Wegefind-Baugruppe (50) verbunden ist und mit wenigstens einer Auslöseeinrichtung (61) in wahlweiser Verbindung steht, die eine Signalmarke (52) im Boden im Zusammenhang mit einem fahrzeugeigenen Empfänger (51) eine fahrzeuginterne Wegmessung (49) und eine fahrzeuginterne Zeitmessung umfaßt.

13. Anlage nach einem der Ansprüche 2 bis 12 mit einem Sensor, dadurch gekennzeichnet, daß der Sensor (1) aus wenigstens zwei Spulen (1′, 1˝), die senkrecht bzw. waagerecht in gleicher Höhe am Fahrzeug angeordnet sind, besteht, die als Kreuzspuleninstrument (1) ausgeführt sind.

## Claims

1. A system for guiding floor trucks (65) having at least a steerable wheel (69) and means for transmitting routing signals to said floor truck, comprising a sensor (24) cooperating with a signal track means (4, 5, 6; 15, 16), in particular a guiding wire means installed in the travelling floor, wherein the sensor (24) is provided to centrally sense said signal track means (4, 5, 6; 15, 16), said sensor being connected to a steering means (26) for controlling the turning of said steerable wheels (6) of said floor truck, and said system further comprising signal track means branching to the left or right from a straight track, characterized in that a steering routing pilot control assembly is provided which is adjustable with respect to time or travel distance and that a lateral branching control is initiated which is short with respect to travel distance or limited with respect to time, wherein said lateral branching control provides a lateral offset value with respect to said signal track means (4, 5, 6; 15, 16) installed in the travelling floor, and the maintainance of said offset value during travelling parallel to said signal track means (4, 5; 15, 16), in particular said guiding wire means.

2. The system of claim 1, characterized in that a signal is provided in said signal track means, in particular said guiding wire means, for steering back to the central travel above said signal track means.

3. The system of claim 1 or 2, comprising an identifying means installed in said floor, characterized in that said identifying means is provided with an address of the branching means and that a control value in response to a received signal is provided in the steering means (26) for steering the vehicel along a lateral offset travel (9', 10') and that a signal generating means (11, 12) is provided to terminate the lateral offset travel.

4. The system of claim 3, characterized in that the steering routing pilot control assemblies (31, 32; 37, 38) are actuated by markings (52) defining travelling routes.

5. The system of one of claims 1 to 4, characterized in that the steering routing pilot control assembly for a guiding wheel provides for laterally turning said guiding wheel as determined by a signal compensation and subsequently provides for its adjustment parallel to said signal track means, in particular guiding wire means (4, 5; 15, 16), wherein the steering routing pilot control assembly includes switch-over transmitters providing guiding the vehicle in a predetermined distance parallel to said signal track means, in particular guiding wire means, for a predetermined time or, respectively distance.

6. The system of one of claims 1 to 3 and 5, comprising a time control means, characterized in that a time control means is actuated when running into a branch, which time control means is switched off after a predetermined time, wherein switching off results in a return and in sensing a signal track means, in particular a guiding wire, free of any lateral preference.

7. The system of claim 5, characterized by a distance control means which is actuated when running into a branch and which is switched off after a predetermined travelling distance, and by initiating a return to a central sending of a signal track means, in particular a guiding wire by means of said switching off.

8. The system of claim 5 or 7, characterized by a distance measuring means (59) which is actuated by a switch (59) in response to a signal receiver (51) via a routing circuit assembly (50) and a selection switch (61).

9. The system of one of claims 1 to 7, characterized in that the floor truck includes a plurality, in particular three, signal transmitters for the steering means (26), said transmitters defining comparing means including means for supplying the sensor signal and furthermore being connected to signal sources (36 to 38), one of which controlling the central travelling via a signal track means and both the other signal inputs controlling a lateral offset resulting in a lateral parallel travel.

10. The system of claim 9, characterized in that the comparing means (30 - 32) each includes an input from the sensor (24) and another input each from a signal source (36 - 38) including a signal for straight travelling and branching off to the right of left.

11. The system of claim 10, characterized in that the plurality of, in particular three, comparing means (30 - 32) is outputted to a switching means (46) which is actuated in response to signals generated by an external identifying mark (52) and which actuates one of said switches (43 - 45) in a closing sense after evaluating a distance tracking program.

12. The system of one of claims 2 to 11, characterized in that a signal assembly distance travelling termination (56) is provided which is connected to said switching means (46) and that the signal assembly distance travelling termination (56) connected to said routing assembly (50) selectively communicates with at least an initiating means (61) comprising a signal mark (52) installed in the floor in combination with a vehicle mounted receiver (51), a vehicle internal distance measuring means (49) and a vehicle internal time measuring means.

13. The system of one of claims 2 to 12, comprising a sensor, characterized in that the sensor (1) comprises at least a pair of coils (1', 1'') which are vertically or horizontally arranged on the vehicle in the same height, which coils define a cross-coil instrument (1).

## Revendications

1. Installation de guidage de chariots de manutention (65) pourvus d'au moins une roue orientable (69), et de moyens de transmission de signaux destinés à déterminer son orientation montée sur le chariot de manutention, les chariots de manutention étant équipés d'un capteur (24) collaborant avec un guidage émettant des signaux (4, 5, 6; 15, 16), notamment sous la forme d'un système à câble de guidage posé dans la chaussée de l'installation,
le capteur (24) étant prévu pour balayer centralement le guide (4, 5, 6 ; 15, 16) et étant relié à un dispositif de direction (26) pour commander le braquage des roues orientables (69) du chariot de manutention,
et l'installation permettant non seulement un parcours en ligne droite, mais aussi des écarts à droite ou à gauche du guide (4, 5, 6 ; 15, 16) étant prévus dans l'installation,
caractérisée en ce qu'un module de pré-asservissement de direction peut être réglé en temps ou en déplacement,
et une commande d'écart latéral court ou limité dans le temps, en fonction du déplacement, peut être déclenchée, la commande d'écart latéral prévoyant une grandeur de déport latéral par rapport au guide (4, 5 ; 15, 16) dans la chaussée, et la conservation de la grandeur de déport pour un parcours parallèle au guide notamment formé d'un système à câble de guidage (4, 5 ; 15, 16).

2. Installation selon la revendication 1, caractérisée en ce qu'un signal pour commander le retour sur le parcours central, au-dessus du guide, est prévu dans le guide formé notamment d'un système à câble de guidage.

3. Installation selon la revendication 1 ou 2, comprenant des dispositifs de marquage d'identification dans la chaussée,
caractérisée en ce que les dispositifs de marquage d'identification sont réalisés avec une adresse du dispositif de commande d'écart et, en fonction d'un signal reçu, une grandeur de commande est prévue dans le dispositif de direction (26) pour guider le chariot sur un parcours latéralement distant (9', 10'),
et en ce qu'un dispositif émetteur de signaux (11, 12) est prévu, qui met un terme à la déviation latérale vers le parcours avec écart.

4. Installation selon la revendication 3, caractérisée en ce que les modules de pré-asservissement de direction (31, 32 ; 37, 38) peuvent être déclenchés par des marquages (52) déterminés par le trajet parcouru.

5. Installation selon l'une quelconque des revendications 1 à 4, caractérisée en ce que le module de pré-asservissement de direction pour une roue de guidage prévoit une déviation latérale de la roue de guidage déterminée par une comparaison de signaux, puis son réglage en orientation parallèle au guide formé, notamment d'un système à câble de guidage (4, 5 ; 15, 16), des émetteurs de commande commutables étant disposés dans le module de pré-asservissement de direction, qui prévoient, pour un temps déterminé ou un déplacement déterminé, un guidage du chariot à un écartement donné parallèlement au guide formé notamment d'un système à câble de guidage.

6. Installation selon l'une quelconque des revendications 1 à 3 et 5, comprenant une commande de temps, caractérisée en ce qu'une commande de temps peut être déclenchée à l'entrée dans une bifurcation et déconnectée au bout d'un temps donné, la déconnexion produisant un retour à un balayage sans précontrainte latérale d'un guide formé notamment d'un câble de guidage.

7. Installation selon la revendication 5, caractérisée par une commande de déplacement, qui peut être déclenchée à l'entrée dans une bifurcation et déconnectée au bout d'une distance parcourue donnée, et dont la déconnexion provoque un retour à un balayage central d'un guide formé notamment d'un câble de guidage.

8. Installation selon la revendication 5 ou 7, caractérisée par un appareil de mesure de déplacement (59), qui peut être enclenché par un commutateur (58) sous la commande d'un récepteur de signaux (51), par l'intermédiaire d'un module de recherche de trajet (50) et d'un sélecteur (61).

9. Installation selon l'une quelconque des revendications 1 à 7, caractérisée en ce que plusieurs et notamment trois émetteurs de signaux pour le dispositif de direction (26) sont prévus sur le chariot de manutention, émetteurs qui, en tant que comparateurs, d'une part présentent une entrée de signal de capteur et d'autre part sont raccordés à des sources de signal (36-38), dont l'une commande le parcours central au-dessus d'un guide, tandis que les deux autres entrées de signal commandent une déviation latérale, avec pour résultat un parcours latéral en parallèle.

10. Installation selon la revendication 9, caractérisée en ce que les comparateurs (30-32) présentent chacun une entrée du capteur (24) et une autre entrée d'une source de signal respective (36-38), avec un signal pour la marche en ligne droite, l'écart à droite ou l'écart à gauche.

11. Installation selon la revendication 10, caractérisée en ce qu'un régleur de commutation (46) est monté après les comparateurs (30-32), qui sont notamment au nombre de trois, et il peut être déclenché par des signaux apparaissant en fonction d'une marque d'identification externe (52) et, après évaluation d'un programme de guidage de déplacement, il actionne un des commutateurs (43-45) pour le fermer.

12. Installation selon l'une quelconque des revendications 2 à 11, caractérisée en ce qu'est prévu un groupe de signalisation de fin de parcours avec écart (56), qui est relié au régleur de commutation (46),
et en ce que le groupe de signalisation de fin de parcours avec écart (56) est relié au module de recherche de trajet (50), et est relié de manière sélective à au moins un dispositif de déclenchement (61), qui comprend un récepteur (51), propre au chariot, de marques de signalisation (52) placées dans la chaussée, un dispositif de mesure de déplacement (59) interne au chariot et un dispositif de mesure de temps interne au chariot.

13. Installation selon l'une quelconque des revendications 2 à 12, et comportant un capteur, caractérisée en, ce que le capteur (1) est constitué d'au moins deux bobines (1', 1'') qui sont disposées respectivement verticalement et horizontalement à la même hauteur sur le chariot et qui constituent un instrument (1) à bobines croisées.
